# EUROPEAN PATENT SPECIFICATION

(11) **EP 2 066 601 B1**
(45) Date of publication and mention of the grant of the patent: **24.10.2012**
(21) Application number: 06784300.3
(22) Date of filing: 28.09.2006
(51) Int. Cl.: C07B 47/00, C07F 7/18

(54) **HYDROSILYLATION**
HYDROSILYLIERUNG
HYDROSILYLATION

(43) Date of publication of application: 10.06.2009
(73) Proprietor: Agency for Science, Technology And Research, Singapore 138632 (SG)
(72) Inventor: ZHANG, Yugen, Singapore 138669 (SG); YING, Jackie, Y, Singapore 138669 (SG)
(74) Representative: Schumacher & Willsau
(86) International application number: PCT/SG2006/000288
(87) International publication number: WO 2008/039154

(56) References cited:
- US-B1- 6 737 531
- SUZUKI Y ET AL: "Cyanosilylation of aldehydes catalyzed by N-heterocyclic carbenes" TETRAHEDRON, ELSEVIER SCIENCE PUBLISHERS, AMSTERDAM, NL, vol. 62, no. 17, 24 April 2006 (2006-04-24), pages 4227-4231, XP025001854 ISSN: 0040-4020 [retrieved on 2006-04-24]
- WU J ET AL: "N-Heterocyclic carbene: a highly efficient catalyst in the reactions of aziridines with silylated nucleophiles" TETRAHEDRON LETTERS, ELSEVIER, AMSTERDAM, NL, vol. 47, no. 28, 12 July 2006 (2006-07-12) , pages 4813-4816, XP025004409 ISSN: 0040-4039 [retrieved on 2006-07-12]
- CESAR V. ET AL.: 'Designing the 'Search Pathway' in the Development of a New Class of Highly Efficient Stereoselective Hydrosilylation Catalysts' CHEMISTRY EUROPEAN JOURNAL vol. 11, 2005, pages 2862 - 2873, XP008103310
- ENDERS D. ET AL.: 'Immobilized Triazolium Salts as Precursors to Chiral Carbenes - Rhodium-Catalyzed Asymmetric Hydrosilylation as a First Test Reaction' MOLECULES ONLINE vol. 2, 1998, pages 105 - 108, XP008103270
- CHIANESE A.R. ET AL.: 'Axially Chiral Bidentate N-Heterocyclic Carbene Ligands from BINAM: Rhodium and Iridium Complexes in Asymmetric Ketone Hydrosilylation' ORGANOMETALLICS vol. 24, 2005, pages 4432 - 4436, XP008103271
- FUJIHARA T. ET AL.: 'Dendrimer N-heterocyclic carbene complexes with rhodium(I) at the core' CHEMICAL COMMUNICATIONS 2005, pages 4526 - 4528, XP008103272
- DIEZ-GONZALEZ S. ET AL.: 'Cationic Copper(I) Complexes as Efficient Precatalysts for the Hydrosilylation of Carbonyl Compounds' ORGANOMETALLIC vol. 25, 2006, pages 2355 - 2358, XP008103311
- SONG C. ET AL.: 'Bis-paracyclophane N-heterocyclic carbene-ruthenium catalyzed asymmetric ketone hydrosilylation' TETRAHEDRON LETTERS vol. 46, 2005, pages 3241 - 3244, XP025385705
- MAS-MARZA E. ET AL.: 'Coordination Versatility of Pyridine-Functionalized N-Heterocyclic Carbenes: A Detailed Study of the Different Activation Procedures. Characterization of New Rh and Ir Compounds and Study of Their catalytic Activity' INORGANIC CHEMISTRY vol. 44, no. 26, 2005, pages 9961 - 9967, XP008103273
- BANTU B. ET AL.: 'Copper(I) 1,3-R2-3,4,5,6-tetrahydropyrimidin-2-yliden es (R=mesityl, 2-propyl): synthesis, X-ray structures, immobilization and catalytic activity' TETRAHEDRON vol. 61, 2005, pages 12145 - 12152, XP025382870
- ZINN F.K. ET AL.: 'Carbenes: reactivity and catalysis' ANNUAL REPORTS ON THE PROGRESS OF CHEMISTRY, SECTION B vol. 100, 2004, pages 213 - 249, XP008103303
- DIEZ-GONZALEZ S. ET AL.: 'A Simple and Efficient Copper-Catalyzed Procedure for the Hydrosilylation of Hindered and Functional Ketones' JOURNAL OF ORGANIC CHEMISTRY vol. 70, no. 12, 2005, pages 4784 - 4796, XP008103274

## Description

### Technical Field

The present invention relates to a new hydrosilylation (hydrosilation) reaction.

### Background of the Invention

Ketone or imine reduction by hydrogenation, hydroboration and hydrosilylation is one of the most ubiquitous protocols in organic synthesis. Hydrosilylation is a particularly attractive process due to the mild reaction conditions required and the use of inexpensive silane reducing agents.

Although hydrogenation is widely practiced industrially, it faces disadvantages, such as metal leaching, high pressure, expensive catalysts, and cost of catalyst recycling. Other protocols also suffered from different disadvantages. Stoichiometric borane reduction or dihydropyridine reduction catalyzed by organocatalysts are plagued by high costs. A number of transition metal complexes, such as Rh, Ti, Ru, Ir, Zn, Pt, Cu or Sn, have displayed high catalytic activity or selectivity in the hydrosilylation of carbonyl compounds, but share the same problems of metal leaching and costly catalyst regeneration as does hydrogenation. Thus, there is a need for effective organocatalysts for hydrosilylation of ketones and imines.

Recently, Malkov et al. (A. V. Malkov, A. J. P. S. Liddon, P. Ramirez-Lopez, L. Bendova, D. Haigh, P. Kocovsky, Angew. Chem. Int. Ed. 2006, 45, 1432) have developed pyridyloxazoline-catalyzed asymmetric hydrosilylation with trichlorosilane (Cl₃SiH) as the reducing agent. N-heterocyclic carbenes (NHCs) have emerged as an extremely useful class of ligands for transition metal catalysis (D. Bourissou, O. Guerret, F. P. Gabbar, G. Bertrand, Chem. Rev. 2000, 100, 39; W. A. Herrmann, Angew. Chem. Int. Ed. 2002, 41, 1290). NHC-metal complexes have been successfully used in many processes, such as olefin metathesis, C-C and C-N cross-coupling, olefin hydrogenation, transfer hydrogenation of ketones, and symmetric and asymmetric hydrosilylation. Recently, NHCs have also been reported as powerful nucleophilic organocatalysts. Many important transformations, such as, hydroacylation, Benzoin, enolate, Stetter, and cyanosilylation, can be catalyzed by NHCs.

Other reports of synthetic uses of N-heterocyclic carbenes include Wu et al (Tetrahedron Letters, 47 (2006) 4813-4816) which describe N-heterocyclic carbene catalysed ring-opening of aziridines using silylated nucleophiles, and Suzuki et al (Tetrahedron, 62 (2006) 4227 to 4231) in which an N-heterocyclic carbine was used for enantio-selective cyanosilylation. In Zinn F.K. et al.: "Carbenes: reactivity and catalysis" Annual reports on the progress of chemistry, Section B, vol. 100, 2004, pages 213-249, XP008103303, shows an example for traditional hydrosilylation reactions catalysed by metal carbene complexes.

There is a need for hydrosilylation protocols with more easily prepared and less expensive organocatalysts, as well as for silane reducing agents that are more easily handled.

### Object of the Invention

It is an object of the present invention to substantially overcome or at least ameliorate one or more of the above disadvantages. It is further object to at least partially satisfy at least one of the above needs.

### Summary of the Invention

In a first aspect of the invention there is provided a process for converting a substrate to a product comprising exposing the substrate to a hydrosilane in the presence of a metal-free carbene catalyst according to claim 1.

The substrate may be a carbonyl compound (e.g. an aldehyde or a ketone), an imine or an alcohol (e.g. a primary, secondary or tertiary alcohol). The product may be a silyl ether (from a carbonyl compound or an alcohol), an amine (from an imine), or may be some other type of product. The substrate may be chiral or it may be achiral. It may be racemic. If the substrate is chiral, the reaction may proceed with retention of the chirality of the substrate. The hydrosilane may be chiral, and the reaction may proceed enantioselectively. The product may be formed with an enantiomeric excess of at least about 25%, or at least about 30, 40, 50, 60, 70, 80, 90, 95 or 99%, e.g. about 25, 30, 35, 40, 45, 50, 55, 60, 65, 70, 75, 80, 85, 90, 91, 92, 93, 94, 95, 96, 97, 98 or 99%.

The hydrosilane may be a monohydrosilane (of the form R^{a}R^{b}R^{c}SiH, where R^{a}, R^{b} and R^{c} are not hydrogen), a dihydrosilane (of the form R^{a}R^{b}SiH₂, where R^{a} and R^{b} are not hydrogen) or a trihydrosilane (of the form R^{a}SiH₃, where R^{a} is not hydrogen), or may be silane (SiH₄). R^{a}, R^{b} and R^{c} may be the same or different, or two may be the same and one different. They may independently be alkyl, cycloalkyl, aryl or heteroaryl groups and may optionally be substituted. The alkyl group may be straight chain or branched, and may have between about 1 and 20 carbon atoms (or 3 and 20 for a branched alkyl group), or between about 1 and 18, 1 and 12, 1 and 6, 3 and 6, 3 and 12, 6 and 20, 12 and 20 or 6 and 12, e.g. 1, 2, 3, 4, 5, 6, 8, 10, 12, 14, 16, 18 or 20 carbon atoms. The cycloalkyl groups may have between 3 and 10 ring members, and may have between 3 and 6, 6 and 10 or 4 and 8 ring members, e.g. 3, 4, 5, 6, 7, 8, 9 or 10. The aryl group may be a phenyl, fused aryl (e.g. naphthyl, anthracyl etc.), linked aryl (e.g. biphenyl) etc. It may have for example 1, 2, 3, 4 or 5 rings. The heteroaryl group may have 1, 2, 3, 4, 5 or more than 5 heteroatoms, each of which may be, independently, N, O, S or some other heteroatom. The substituents, if present, may be alkyl, cycloalkyl, aryl or heteroaryl as described above, or may be a functional group, e.g. amine, nitro, ester or ether or some other suitable group. The hydrosilane may be stable under normal laboratory conditions in the absence of moisture. It may be non-oxidisable in air at 25°C. Examples of suitable silanes include triphenylhydrosilane (triphenylsilane) and diphenyldihydrosilane (diphenylsilane). The hydrosilane may be used in an amount of between about 50% and 150% of the amount of substrate on a mole basis, or between about 50 and 100, 100 and 150, 80 and 120, 90 and 110, 95 and 105 or 98 and 102%, or about 50, 60, 70, 80, 90, 95, 96, 97, 98, 99, 100, 101, 102, 103, 104, 105, 110, 120, 130, 140 or 150%, e.g. about 100% of the amount of substrate on a mole basis.

The carbene catalyst is a metal-free carbene catalyst. It may be a metal-free polymeric carbene catalyst. It may be a metal-free main chain polymeric carbene (i.e. the carbene centres may be in the main chain of the polymer). The metal-free carben catalyst may be a non-polymeric catalyst. It may be a monomeric catalyst. It may be an oligomeric catalyst (e.g. dimeric, trimeric, tetrameric, pentameric, hexameric, heptameric, octameric, nonameric, decameric or higher). It may be a mixture of two or more oligomeric catalysts, optionally with a monomeric catalyst, optionally with a polymeric catalyst. It may be an N-heterocyclic carbene catalyst. It may be a diazolium (or imidazolium) carbene catalyst. It may be a stable diazolium (or imidazolium) carbene catalyst. The metal-free carben catalyst may be nucleophilic. It may be a nucleophilic polymeric carbene catalyst. The polymeric metal-free carbene catalyst may comprise main chain nitrogen-containing heterocycles. It may be a polymeric main chain N-heterocyclic carbene (polyNHC). It may be for example an imidazolium (or imidazolium) carbene polymer, a pyrazolium carbene polymer, a triazolium carbene polymer or a benzimidazolium carbene polymer or some other type of polyNHC. The metal-free carbene catalyst may be used in an amount such that the proportion of active sites in the catalyst relative to the substrate is between about 1% and about 20% on a mole basis, or between about 1 and 10, 1 and 5, 5 and 20, 10 and 20, 5 and 15 or 8 and 12%, and may be used in an amount such that said proportion is about 1, 2, 3, 4, 5, 6, 7, 8, 9, 10, 11, 12, 13, 14, 15, 16, 17, 18, 19 or 20%, e.g. about 10%. The metal-free carbene catalyst may be reused for subsequent reactions, commonly as a catalyst in subsequent reactions. It may be reused once, twice, or 3, 4, 5, 6, 7, 8, 9, 10 or more than 10 times. The loss of catalytic activity of the metal-free carbene catalyst for each reuse may be less than about 10%, or less than about 8, 6, 4, 2 or 1%. In this context the loss of catalytic activity is given by 100*(1-y2/y1), where y1 is the yield of product from a first reaction and y2 is the yield of product from a reaction using the same conditions as the first reaction but reusing the catalyst from the first reaction.

The reaction (i.e. the process of the invention) may be conducted in a solvent, which may be a solvent or a non-solvent for one or more of the substrate, the hydrosilane and the metal-free carbene catalyst. In some embodiments, the metal-free carbene catalyst is insoluble in the solvent i.e. the metal-free carbene catalyst functions as a heterogeneous catalyst. In this context, "insoluble" relates to a solubility whereby a saturated solution at the temperature used in the process is less than about 1mM, or less than about 0.5, 0.1, 0.05 or 0.01mM based on active carbene sites. In other embodiments the metal-free carbene catalyst is at least partially soluble in the solvent. The solvent may be a polar solvent. It may be an aprotic solvent. It may be incapable of reacting with the hydrosilane in the presence of the carbene catalyst. Suitable solvents include tetrahydrofuran (THF), N-methylpyrrolidone (NMP), dimethylformamide (DMF), dimethylsulfoxide (DMSO), hexamethylphosphoramide (HMPA), hexamethylphosphorous triamide (HMPT), dichloromethane, chloroform, toluene, acetonitrile, trichloroethane or mixtures of any two or more thereof. The reaction may be conducted in an inert atmosphere, e.g. nitrogen, carbon dioxide, helium, neon, argon or a mixture of any two or more of these. It may be conducted at room temperature, or at some other temperature, for example between about 0 and about 50°C, or between about 1 and 40, 0 and 30, 0 and 20, 0 and 10, 0 and 5, 10 and 50, 20 and 50, 30 and 50, 10 and 40, 10 and 30 or 20 and 30°C, e.g. about 0, 5, 10, 15, 20, 25, 30, 35, 40, 45 or 50°C, or may be greater than 50 or less than 0°C. The reaction time will depend on the nature of the substrate, the metal-free carbene catalyst and the hydrosilane, and on the reaction temperature. It may also depend on the nature of the solvent and the concentration of the substrate, the metal-free carbene catalyst and/or the hydrosilane in the solvent. It may for example be between about 1 and about 100 hours, or between about 5 and 100, 10 and 100, 20 and 100, 1 and 50, 1 and 30, 1 and 20, 1 and 10, 10 and 80, 10 and 50, 10 and 40, 15 and 30, 20 and 28 or 22 and 26 hours, for example about 1, 2, 3, 4, 5, 6, 7, 8, 9, 10, 11, 12, 15, 18, 21, 22, 23, 24, 25, 26, 27, 28, 29, 30, 33, 36, 39, 42, 45, 48, 50, 55, 60, 65, 70, 75, 80, 85, 90, 95 or 100 hours, or may be more than 100 hours. The process may comprise separating the product from the reaction mixture. This may comprise filtering (particularly if the metal-free carbene catalyst is insoluble in the solvent), chromatographic separation, evaporation of the solvent, fractional crystallisation or some other separation process, or may comprise a combination of such processes.

The concentration of the substrate in the solvent may be between about 0.1 and about 1M, or between about 0.1 and 0.5, 0.1 and 0.2, 0.2 and 1, 0.5 and 1, 0.2 and 0.5 or 0.15 and 0.25M, e.g. about 0.1, 0.15, 0.2, 0.25, 0.3, 0.35, 0.4, 0.45, 0.5, 0.6, 0.7, 0.8, 0.9 or 1M, or some other suitable concentration, depending in part on the solubility of the substrate and the hydrosilane in the solvent.

The process may convert the substrate to the product with a yield of at least 75% on a molar basis, or at least about 80, 95, 90, 95, 96, 97, 98 or 99% yield. The reaction may be approximately quantitative. It may have a yield of about 75, 80, 85, 90, 95, 96, 97, 98, 99 or 100%. It may yield a single product, or may yield more than one product, e.g. 2, 3, 4, 5 or more than 5 products. The total yield of products may be as described above. If more than one product is produced, each independently may or may not be produced enantioselectively as described earlier.

In an embodiment there is provided a process for hydrosilylating a carbonyl compound comprising exposing said carbonyl compound to a polymeric metal-free carbene and a hydrosilane. The process may be an asymmetric hydrosilylation of the carbonyl compound. The hydrosilane may be chiral. It may be a chiral alkoxyhydrosilane. The chiral alkoxyhydrosilane may be formed by reacting a chiral alcohol with a dihydrosilane in the presence of a polymeric metal-free carbene. The polymeric metal-free carbene used for forming the chiral alkoxyhydrosilane may be the same as or different to the polymeric metal-free carbene used for hydrosilylating the carbonyl compound. The chiral alkoxyhydrosilane may be separated before it is reacted with the carbonyl compound, or may not be separated. The invention also describes a product when made by the process of this embodiment. The product may be an alkyl silyl ether, and may be a chiral alkyl silyl ether.

In another embodiment there is provided a process for hydrosilylating an alcohol comprising exposing said alcohol to a polymeric metal-free carbene and a hydrosilane. The hydrosilane may be a mono-, di-, tri- or tetrahydrosilane. If the alcohol is a chiral (asymmetric) alcohol, the reaction may proceed with at least partial retention of chirality (e.g. at least about 25, 30, 35, 40, 45, 50, 60, 70, 80, 90, 95 or 99% retention of chirality). The invention also describes a product when made this embodiment. The product may be an alkyl silyl ether, and may be a chiral alkyl silyl ether. It may be a silyl monoalkylether, or may be a silyl di-, tri- or tetra-silyl ether, depending in part on the nature of the hydrosilane.

In another embodiment there is provided a process for reducing an imine comprising exposing said carbonyl compound to a metal-free carbene and a hydrosilane. The hydrosilane may be a dihydrosilane. Alternatively it may be a monohydrosilane, a trihydrosilane or may be tetrahydrosilane. The invention also describes a product when made by this embodiment. The product may be an amine, for example a primary or a secondary amine.

### Brief Description of the Drawings

A preferred embodiment of the present invention will now be described, by way of an example only, with reference to the accompanying drawings wherein:
Figure 1 shows a reaction scheme showing a protocol for the asymmetric hydrosilylation of ketones according to the present invention;
Figure 2 shows the structures of poly-imidazolium salts **1** or carbene **2** particles, as described herein;
Figure 3 shows a reaction scheme for poly-NHC catalyzed ketone hydrosilylation by diphenylsilane;
Figure 4 shows a proposed mechanism for poly-NHC catalyzed ketone hydrosilylation;
Figure 5 shows a reaction scheme for poly-NHC catalyzed imine hydrosilylation by diphenylsilane;
Figure 6 shows a reaction scheme for poly-NHC catalyzed silane alcohol condensation and asymmetric ketone hydrosilylation reaction; and
Figure 7 shows a proposed mechanism for poly-NHC catalyzed ketone asymmetric hydrosilylation.

### Detailed Description of the Preferred Embodiments

The metal-free carbene catalyst used in the present invention may be a stable metal-free carbene catalyst. It may be stable under normal laboratory conditions. It may be capable of being stored at about 25°C (or at less than 25°C, e.g. about 20, 15, 10, 5 or 0°C) in the absence of oxygen and moisture for at least 24 hours (or at least about 18, 12 or 6 hours) without significant degradation. Significant degradation in this context may refer to a loss of catalytic activity of greater than about 10%, or greater than about 5, 2 or 1%. It may be sufficiently stable that the reaction of the present invention may be conducted without generating the carbene catalyst *in situ.*

Embodiments of the present invention involve three novel and important processes catalysed by heterogeneous poly-NHC carbenes:
- hydrosilylation of carbonyls and imines;
- dehydrogenative condensation between a silane and an alcohol; and
- asymmetric hydrosilylation of a carbonyl compound.

Each of these processes involves the reaction of a hydrosilane with a substrate in the presence of a polymeric metal-free carbene catalyst.

Thus the substrate may be a carbonyl compound, an imine or an alcohol. The carbonyl may be an aldehyde or a ketone. The imine may be a ketimine or an aldimine. The alcohol may be primary, secondary, tertiary, benzylic or aromatic. The carbonyl compound may have structure R¹C(=O)R², the imine may have structure R¹C(=NR³)R² and the alcohol may have structure R¹R²R³COH. In these structures R¹, R² and R³ may, independently, be H, alkyl, cycloalkyl, aryl or heteroaryl groups and may optionally be substituted. R¹ and R² may be joined so as to form a ring. The ring may have between 3 and 12 members, or between 3 and 12, 6 and 12, 3 and 8, 5 and 8 or 5 and 7 members (e.g. 3, 4, 5, 6, 7, 8, 9, 10, 11 or 12). Some of the atoms (e.g. 1, 2, 3 or 4) may be heteroatoms, e.g. O or N. In the case of an alcohol, R¹, R² and R³ may all be joined to form a bicyclic system. The bicyclic system may have between about 8 and 16 atoms. Some of the atoms (e.g. 1, 2, 3 or 4 of the atoms) may be heteroatoms, e.g. O or N. The alkyl group may be straight chain or branched, and may have between about 1 and 20 carbon atoms (or 3 and 20 for a branched alkyl group), or between about 1 and 18, 1 and 12, 1 and 6, 3 and 6, 3 and 12, 6 and 20, 12 and 20 or 6 and 12, e.g. 1, 2, 3, 4, 5, 6, 8, 10, 12, 14, 16, 18 or 20 carbon atoms. The cycloalkyl groups may have between 3 and 10 ring members, and may have between 3 and 6, 6 and 10 or 4 and 8 ring members, e.g. 3, 4, 5, 6, 7, 8, 9 or 10. The alkyl or cycloalkyl groups may have heteroatoms (e.g. ether, amine functionality). The aryl group may be a phenyl, fused aryl (e.g. naphthyl, anthracyl etc.), linked aryl (e.g. biphenyl) etc. It may have for example 1, 2, 3, 4 or 5 rings. The heteroaryl group may have 1, 2, 3, 4, 5 or more than 5 heteroatoms, each of which may be, independently, N, O, S or some other heteroatom. The substituents, if present, may be alkyl, cycloalkyl, aryl or heteroaryl as described above, or may be a functional group, e.g. amine, nitro, ester or ether or some other suitable group. The substrate may have one or more than one (e.g. 2, 3, 4, 5, 6, 7, 8, 9 or 10, or between 1 and 20, 1 and 10, 1 and 5, 2 and 20, 5 and 20, 10 and 20, 2 and 15, 2 and 10 or 5 and 10) carbonyl, imine and/or alcohol groups (e.g. may have more than one alcohol group, or may have an alcohol group and a carbonyl group, or may have an alcohol group and more than one imine groups etc.). The carbonyl compound may be a polycarbonyl compound. The alcohol may be a polyhydric alcohol. The imine may be a polyimine compound.

Hydrosilation of the above described carbonyl may therefore produce R¹R²HC-OSiR^{a}R^{b}R^{c}, R¹R²HC-OSiR^{a}R^{b}H, R¹R²HC-OSiR^{a}H₂ or R¹R²HC-OSiH₃, where R¹, R², R^{a}, R^{b} and R^{c} are as described before. Dehydrogenative condensation between a silane and the above described alcohol may produce R¹R²R³C-OSiR^{a}R^{b}R^{c}, R¹R²R³C-OSiR^{a}R^{b}H, R¹R²R³C-OSiR^{a}H₂ or R¹R²R³C-OSiH₃, where R¹ R², R³, R^{a}, R^{b} and R^{c} are as described before. Hydrosilation of the above described imine may produce R¹CH(NHR³)R² where R¹, R² and R³ are as described before.

The polymeric metal-free carbene may comprise heterocyclic groups, and a monomer unit of the polymeric carbene may comprise two of the heterocyclic groups joined by a linker group. For example a suitable metal-free polymeric carbene may have structure I. 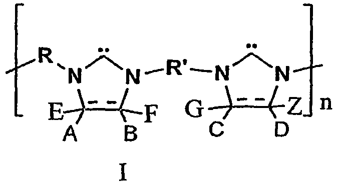 In structure I, -- represents either a single or a double bond, wherein, if -- represents a double bond, substituents E, F, G and Z are not present. Substituents A, B, C and D, and, if present, E, F, G and Z may each, independently, be hydrogen or a substituent which is not hydrogen. They may, independently, be hydrogen, alkyl (e.g. straight chain, branched chain, cycloalkyl), aryl (e.g. phenyl, naphthyl), halide (e.g. bromo, chloro), heteroaryl (e.g pyridyl, pyrrolyl, furanyl, furanylmethyl, thiofuranyl, imidazolyl), alkenyl (e.g. ethenyl, 1-, or 2-propenyl), alkynyl (e.g. ethynyl, 1- or 3-propynyl, 1-, 3- or 4-but-1-ynyl, 1- or 4-but-2-ynyl etc.) or some other substituent. A, B, C and D and, if present, E, F, G and Z, maybe all the same, or some or all may be different. The alkyl group may have between about 1 and about 20 carbon atoms (provided that cyclic or branched alkyl groups have at least 3 carbon atoms), or between about 1 and 12, 1 and 10, 1 and 6, 1 and 3, 3 and 20, 6 and 20, 12 and 20, 3 and 12 or 3 and 6, e.g. 1, 2, 3, 4, 5, 6, 7, 8, 9, 10, 11, 12, 14, 16, 18 or 20 carbon atoms, and may for example be methyl, ethyl, 1- or 2-propyl, isopropyl, 1- or 2-butyl, isobutyl, tert-butyl, cyclopentyl, cyclopentylmethyl, cyclohexyl, cyclohexylmethyl, methylcyclohexyl etc. The substituents may be optionally substituted (e.g. by an alkyl group, an aryl group, a halide or some other substituent) or may comprise a heteroatom such as O, S, N (e.g. the substituent may be methoxymethyl, methoxyethyl, ethoxymethyl, polyoxyethyl, thiomethoxymethyl, methylaminomethyl, dimethylaminomethyl etc.). Substituents A, B, C and D, and, if present, E, F, G and Z may each, independently, be chiral or achiral.

Any two of A, B, C and D, and, if present, E, F, G and Z may be joined to form a cyclic structure. Thus the rings of structure I may have fused or spiro- joined rings. For example if - - represents a single bond, A and E (or any other pair of substituents attached to the same carbon atom) may be joined to form a cyclopentyl, cyclohexyl or some other ring. In the case where A and E form a cyclopentyl ring, this would for example form a 1,3-diazaspiro[4.4]nonane structure. Alternatively, A and B (or any other pair of substituents attached to adjacent carbon atoms) may be joined to form a cyclopentyl, cyclohexyl or some other ring. In the case where A and B form a cyclopentyl ring, this would for example form a 1,3-diazabicyclo[3.3.0]octane structure. Further, if - - represents a single bond, A and E (or any other pair of substituents attached to the same carbon atom) may represent a single substituent joined to a ring carbon atom by a double bond. Thus for example the polymeric carbene may have structure Ia, Ib or Ic. Those skilled in the art will readily appreciate that other variants are possible and are included in the scope of this disclosure.

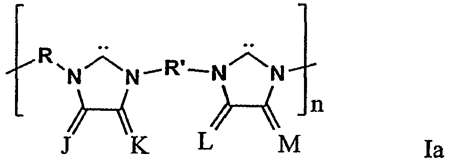

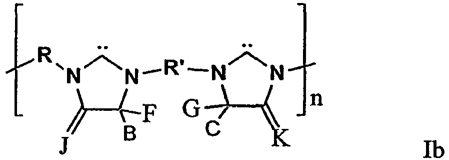

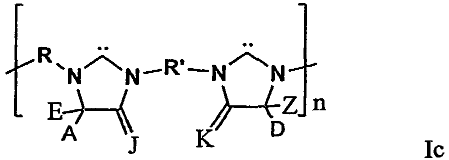

In structures Ia, Ib and Ic, J, K, L and M may independently be =CPQ or =NP, where P and Q are, independently, as defined earlier for A to G and Z. For example J, K, L and M may, independently, be =CH₂, =CHCH₃, =CHPh, NCH₃ or =NPh, or some other suitable double bonded group. As a further alternative, if - - represents a double bond, the rings of structure I, may be fused with an aromatic or heteroaromatic ring. Thus for example metal-free polymeric carbene I may have structure Id (optionally substituted on the aromatic ring).

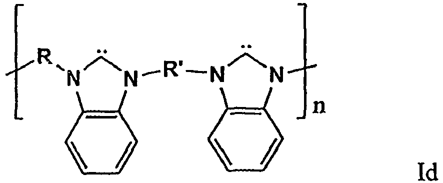

In structures I, Ia, Ib, Ic and Id, R and R' are linker groups. R and R' may each independently, be a rigid linker group or may be a non-rigid or semi-rigid linker group. Suitable rigid linker groups include aromatic groups, heteroaromatic groups, cycloaliphatic groups, suitably rigid alkenes and suitably rigid alkynes. Suitable linker groups include optionally substituted ethenyl (e.g. ethenediyl, propen-1,2-diyl, 2-butene-2,3-diyl), ethynyl (e.g. ethynediyl, propynediyl, but-2,3-yne-1,4-diyl), aryl (1,3-phenylene, 1,4-phenylene, 1,3-naphthylene, 1,4-naphthylene, 1,5-naphthylene, 1,6-naphthylene, 1,7-naphthylene, 1,8-naphthylene), heteroaryl (e.g. 2,6-pyridinediyl, 2,6-pyrandiyl, 2,5-pyrrolediyl), or cycloalkyl linker groups (e.g. 1,3-cyclohexanediyl, 1,4-cyclohexanediyl, 1,3-cyclopentanediyl, 1,3-cyclobutanediyl,) groups. Suitable non-rigid or semi-rigid linker groups include -(CH₂)ₘ-, where m is between 1 and about 10, and these may be optionally substituted and/or branched, e.g. 1,2-ethanediyl, 1,2- or 1,3-propanediyl, 1,2-, 1,3-, 1,4- or 2,3-butanediyl, 2-methyl-butane-3,4-diyl etc. The linker groups may be optionally substituted (e.g. by an alkyl group, an aryl group, a halide or some other substituent) or may comprise a heteroatom such as O, S, N (e.g. a suitable linker group may be -CH₂OCH₂- -CH₂OCH₂CH₂ -CH₂OCH(CH₃)-, -(CH₂OCH₂)ₚ- (p between 1 and about 100), -CH₂NHCH₂-, CH₂N(CH₃)CH₂-, -CH₂N(Ph)CH₂-, -CH₂SCH₂-etc.).

The polymeric metal-free carbene may be a copolymer, i.e. may comprise other monomer units than those of structure I. Similarly, the copolymer may comprise only one type of monomeric unit, as shown in structure I, or may comprise 2, 3 or more than 3 different types of monomeric unit, each of which is as described above for polymeric carbene I (and/or Ia, Ib, Ic and/or Id). The degree of polymerisation n may be sufficiently large that the polymeric carbene is insoluble in the solvent used in the process. n may be greater than about 5, or greater than about 10, 15, 20, 30, 40, 50, 60, 70, 80, 90, 100, 200, 300, 400, 500, 600, 700, 800, 900 or 1000, or may be between about 5 and 1000, 10 and 1000, 50 and 1000, 100 and 1000, 200 and 1000, 500 and 1000, 5 and 500, 5 and 200, 5 and 100, 5 and 50, 5 and 20, 5 and 10, 10 and 50, 50 and 500, 50 and 200, 50 and 100 or 100 and 300. n may be about 5, 6, 7, 8, 9, 10, 15, 20, 30, 40, 50, 60, 70, 80, 90, 100, 150, 200, 250, 300, 350, 400, 450, 500, 600, 700, 800, 900 or 1000, or may be some other value.

The polyNHC may conveniently be made from the corresponding salt, e.g. halide salt.

The metal-free carbene catalyst may be a stable diazolium (or imidazolium) carbene catalyst. It may have stablilising groups on the diazolium (or imidazolium) ring, for example on one or both of the nitrogen atoms of the diazolium (or imidazolium) ring. It may for example have structure II: 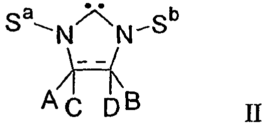 where A, B, C and D are as described earlier. In structure II, - - represents either a single or a double bond, wherein, if - - represents a double bond, substituents C and D are not present. Substituents S^{a} and S^{b} are groups such that the carbene catalyst is stable. They may be stabilising groups. They may, independently, be oligomeric or polymeric, or may be not oligomeric or polymeric. They may, independently, stabilise the catalyst sterically and/or electronically. They may stabilise the catalyst so that it is stable, but is still capable of catalysing the reactions described herein (i.e. hydrosilation of a carbonyl or alcohol or reduction of an imine). They may each independently be for example t-butyl, phenyl, trimethylphenyl, adamantyl or some other stabilising group.

The inventors have found at ketone and imine hydrosilylation reactions proceeded very smoothly and cleanly over metal-free poly-N-heterocyclic carbene (poly-NHC) organocatalysts. The novel metal-free heterogeneous catalyst was recyclable. Only about 1 mole equivalent of silane was needed, and quantitative product was attained under mild conditions. Poly-NHC was also an excellent catalyst for the dehydrogenative condensation between a silane and an alcohol. Asymmetric ketone hydrosilylation was achieved with cheap and easily accessible secondary alcohol as the chiral source. This process creates a new and easy method for producing chiral silanes, and for the asymmetric hydrosilylation by organocatalysis. These reactions may be catalyzed by chiral and achiral NHCs. The present invention provides a clean, economical and environmentally friendly process for the hydrosilylation of ketones and imines (chiral or achiral). It has the advantage of providing metal-free heterogeneous and homogeneous catalysis. This provides the benefit that the reaction medium may be non-basic. The use of basic reaction media for these reactions restricts the substrates to those which are not base-sensitive. Additionally it can lead to side-reactions and production of unwanted by-products, and may reduce the yield of the desired product. Base catalysed reactions may be difficult to control. Thus a reaction according to the present invention may be conducted in a non-basic medium. They may be conducted in a neutral (i.e. pH 7) or acidic medium. They may be conducted at a pH of less than about 8, or less than about 7, 6, 5, 4 or 3, or at a pH of between about 1 and about 8, or between about 2 and 8, 3 and 8, 4 and 8, 5 and 8, 6 and 8, 7 and 8, 1 and 7, 1 and 5, 1 and 3, 3 and 7, 5 and 7 or 6 and 7, e.g. at about 8, 7.5, 7, 6.5, 6, 5.5, 5, 4.5, 4, 3.5, 3, 2.5, 2, 1.5 or 1.

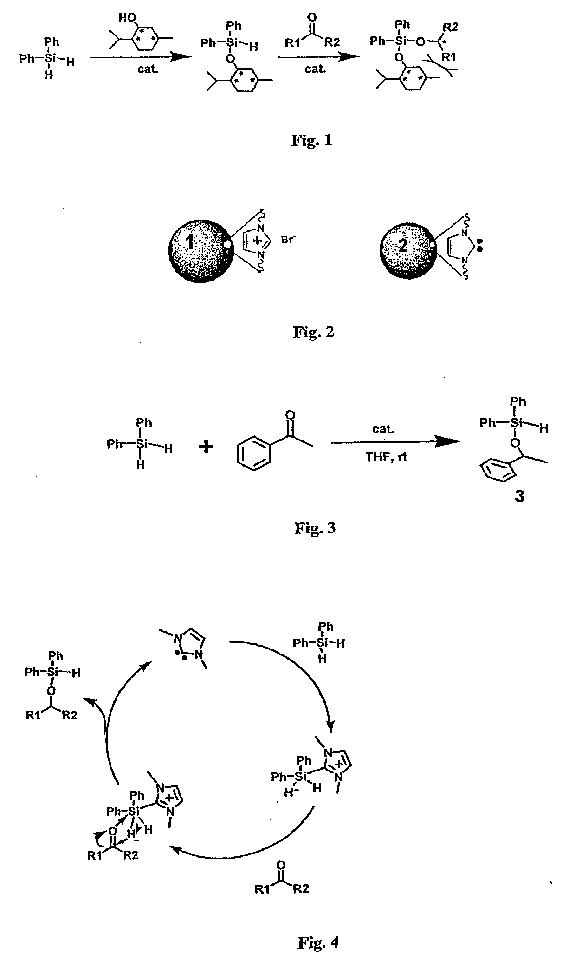

The present invention demonstrates for the first time that metal-free NHC-based organocatalysts can catalyze ketone and imine hydrosilylation. Cheap and easy-to-handle diphenylsilane has been successfully employed as the reducing agent. The inventors have also developed a novel chiral induction protocol for an asymmetric hydrosilylation process. As demonstrated in Fig. 1, chirality may be transferred from a chiral secondary alcohol such as menthol or borneol (which are inexpensive and readily available natural products) to a hydrosilylated product.

### Examples

*Ketone hydrosilylation catalyzed by heterogeneous poly-NHC catalyst.* The inventors have previously developed a new type of heterogeneous NHC catalysts, main chain poly-NHCs, which were spontaneously formed as colloidal nanoparticles or microparticles. These are described in PCT/SG2006/000084 "Polymeric salts and polymeric metal complexes". Two-step alkylation was designed to produce poly-imidazolium salts. Rigid spacers were used to ensure regiocontrol over alkylation, and to inhibit the formation of small-ring products. In an example, imidazole was treated with α,α-dichloro-*p*-xylene in a 2:1 ratio with base. The intermediate α,α'-diimidazolyl-*p*-xylene was formed, and then reacted with 2,4,6-tris(bromomethyl)mesitylene (in 3:2 molar ratio) in hot dimethylformamide (DMF). Uniform spherical microparticles or nanoparticles composed of poly-imidazolium salt networks **1** were spontaneously generated (Fig. 2). The poly-imidazolium salt was suspended in DMF and treated overnight with a base, potassium *tert*-butoxide, followed by filtration and washing to give a yellow brown powder of poly-NHC **2**. These poly-imidazolium salts **1** or carbene **2** particles were insoluble in common solvents, and can be used as heterogeneous catalysts.

Diphenylsilane was used as the reducing agent in the present hydrosilylation process (Fig. 3). **2** (in 10 mol% to substrate) was suspended in tetrahydrofuran (THF), and then diphenylsilane and acetophenone (in 1:1 molar ratio) were added to the reaction vial. The reaction was stirred at room temperature overnight. Diphenyl(1-phenylethoxy)silane **3** was the only product obtained in significant yield. The product was confirmed by GC/MS and NMR. Different ketone substrates were examined (see Table 1). The poly-NHC was found to be an excellent catalyst for the ketone hydrosilylation reaction. The reaction proceeded smoothly under mild conditions and was well-controlled. The poly-NHC catalyst was easily recycled by filtration and washing. The recycled catalyst showed similar activity to the fresh catalyst. When DMF was used as the solvent instead of THF, the reaction was very fast, and a mixed product of 1-phenylethanol, diphenyl(1-phenylethoxy)silane and diphenyldi(1-phenylethoxy)silane were obtained. This suggested that the polar solvent DMF increased the activity of NHC, causing part of the product to be over-reduced by silane. On the other hand, the reaction did not work in dichloromethane and toluene. Both aryl ketone and alkyl ketone were found to be active in this reaction (see Table 1).

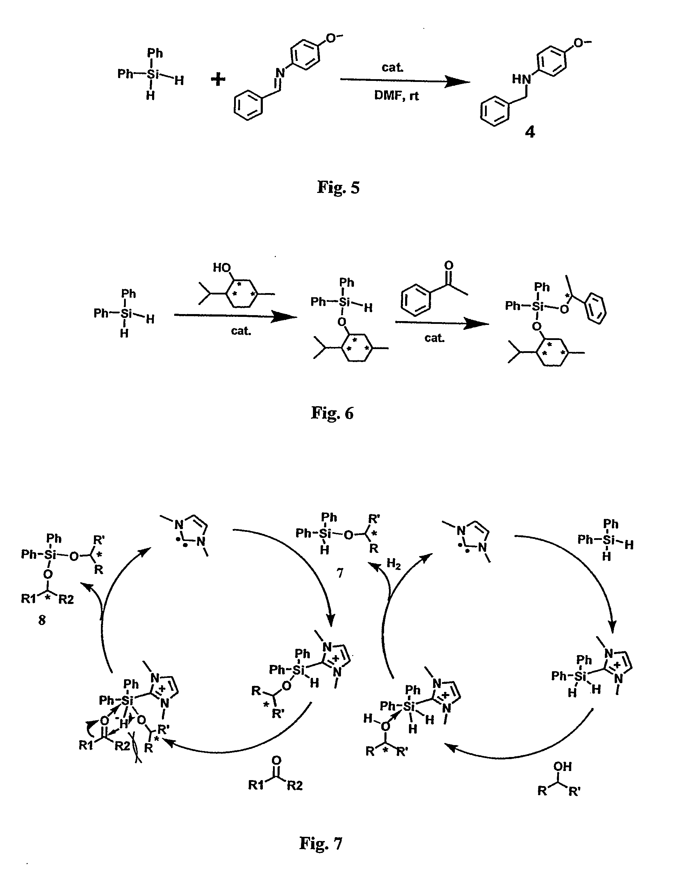

A proposed reaction mechanism is shown in Fig. 4. Diphenylsilane was firstly activated by nucleophilic NHC. The activated silane then reduced the ketone carbonyl to form siloxane, while releasing NHC to close one catalytic cycle. In most hydrosilylation reactions, excess silane (2 to 5 mole equivalents to substrate) was required for the metal complexes or organocatalysts employed. In the present case, only 1 mole equivalent of silane was needed, and quantitative product was attained. Since this reaction worked under mild conditions and in a well-controlled manner, the inventors considered that extension to asymmetric reactions using a chiral NHC could be very promising. *Imine hydrosilylation catalyzed by heterogeneous poly-NHC catalyst.* Since the ketone hydrosilylation reaction worked well in the poly-NHC catalyst system, the inventors applied this system to imine hydrosilylation (Fig. 5). Initially THF was used as the solvent to carry out the reaction, but unfortunately, the reaction did not proceed efficiently. DMF was then tried as the solvent for this reaction. Using DMF as solvent, the amine product was achieved in high yield. **2** (10 mol% to substrate) was suspended in DMF, and then diphenylsilane and N-(4-methoxyphenyl)-N-(1-phenylethyl)imine (1 mole equivalent to diphenylsilane) were added to the reaction vial. The reaction mixture was stirred at room temperature overnight, and the product was characterized by GC-MS and NMR. N-(4-methoxyphenyl)-N-(1-phenylethyl)amine **4** was the only product in quantitative yield. The mechanism of this reaction was thought to be the same as ketone hydrosilylation: silane was firstly activated by NHC, followed by imine reduction. *Asymmetric hydrosilylation of ketones: Chirality induced by secondary alcohol* Almost all asymmetric hydrosilylation reactions have relied on catalysis by chiral catalysts. Chiral silanes have very rarely been used due to the difficulty in preparing them. Use of chiral silanes in asymmetric hydrosilylation has not been reported to date. The inventors have developed a very simple and inexpensive method to generate chiral silanes through condensation of hydrosilanes with alcohols. A chiral silane was then used directly in asymmetric hydrosilylation reaction to induce chirality in the product (Fig. 6).

Silane alcohol dehydrogenative condensation reactions can be catalyzed by base, Lewis acid and many organometallic complexes. However, these catalysts each suffered from one or more disadvantages. Silanolysis of alcohols with R₂SiH₂ is of particular interest since it can generate chiral R₂(R'O)SiH when a chiral secondary alcohol is used, and the chiral silane can induce chirality in asymmetric hydrosilylation reaction. However, the selective production of mono-substituted silane R₂(R'O)SiH is challenging. Herein, poly-NHC has been developed as a heterogeneous organocatalyst for the silanolysis of secondary alcohol with Ph₂SiH₂ under very mild conditions. The reaction was so clean that dihydrogen (H₂) was the only by-product, and mono-substituted silane Ph₂(R'O)SiH was the only product, obtained in excellent yield. Menthol and borneol were first tested in this reaction to generate chiral silanes since they are inexpensive and easily accessible. The chiral silane product of the silane alcohol condensation reaction was used directly for the ketone hydrosilylation reaction over poly-NHC by the addition of a ketone substrate.

**2** (10 mol% to substrate) was suspended in THF, and then diphenylsilane and (-) menthol (1 equiv. to diphenylsilane) were added to the reaction vial. The reaction was stirred at room temperature overnight, and the product was characterized by GC-MS and NMR. Diphenyl(1-menthoxy)silane **4** was produced in quantitative yield. Next, acetophenone (0.9 equiv. to diphenylsilane) was added to the reaction vial, and the reaction solution was stirred at room temperature for 72 h. Acetophenone was converted to the hydrosilylation product in excellent yield. Beside the desired product diphenylmenthoxy(1-phenylethoxy)silane, some siloxane redistribution products, diphenyldimenthoxysilane and diphenyldi(1-phenylethoxy)silane were also observed in GC/MS. Enantioselectivity was measured by using chiral GC after the product was transformed to the corresponding alcohol. (R)1-phenylethanol was produced in 40% ee (enantiomeric excess). When (+) menthol was used in this reaction, the product was in the (S) form with a similar ee value. Herein, it was demonstrated that poly-NHC could smoothly catalyze the dehydrogenative condensation reaction between diphenylsilane and secondary alcohol to form diphenylalkoxysilane. When a chiral secondary alcohol was used in this reaction, chiral silanes were produced. The chiral silane could be isolated and used directly in the ketone hydrosilylation reaction to induce a chiral product (see Figs. 6 and 7). CsF was also tested in this reaction as a catalyst for the activation of silane. Under similar reaction conditions, CsF gave 36% ee in dichloromethane, and very low ee values in THF and DMF. This contrasted with the results obtained using poly-NHC catalyst: 40% ee in THF and no reaction in dichloromethane. A proposed mechanism of this reaction is illustrated in Fig. 7. Silanes were activated by nucleophilic NHCs in both reactions. In the first reaction, the activated diphenylsilane would react with secondary alcohol to generate siloxane **7** and dihydrogen. In the second reaction, the activated chiral diphenylsiloxane would reduce ketone to form product **8**.

In summary, three novel and important processes have been described. Ketone and imine hydrosilylation reactions proceeded very smoothly and cleanly over the poly-NHC organocatalysts. The novel heterogeneous catalyst was recyclable. Only 1 equiv. of silane was needed, and quantitative product was attained under mild conditions. Poly-NHC was also an excellent catalyst for the dehydrogenative condensation between silane and alcohol. Asymmetric ketone hydrosilylation was achieved with cheap and easily accessible secondary alcohol as the chiral source. This process created a new and easy method for producing chiral silanes, and for the asymmetric hydrosilylation by organocatalysis.

### Experimental

*Hydrosilylation of ketone and imine.* All reactions were carried out in inert atomosphere. For entry 4 of Table 1, 2 (5 mg) was suspended in THF in a 10-ml vial with a stirrer bar in a glove box. Diphenylsilane (0.2 mmol, 37.1 µl) and 4-methoxyacetophenone (0.2 mmol, 24.5 µl) were then added to the reaction vial. The reaction was stirred at room temperature for 24 h. Diphenyl(1-(4-methoxyphenyl)ethoxy)silane (MS, M⁺: 334, ¹H NMR (C6D6), δ: 7.7 (m, 2H), 7.2-7.4 (m, 10H), 6.9 (d, 2H), 5.85 (s, 1H), 5.1 (q, 1H), 3.4 (s, 3H), 1.6 (d, 3H)) was the only product in quantitative yield based on GC/MS and NMR analyses.

*Asymmetric hydrosilylation of ketone with chiral silane intermediate.* **2** (5 mg) is suspended in THF in a 10-ml vial with a stirrer bar. Diphenylsilane (0.2 mmol, 37.1 µl) and (-) menthol (0.2 mmol, 30.8 mg) were then added to the reaction vial. The reaction was stirred at room temperature overnight, and the product was characterized by GC-MS and NMR. Diphenyl(1-menthoxy)silane 4 (MS, M⁺, 338, ¹H NMR (C6D6), δ: 7.2-7.4 (m, 10H); 5.83 (s, 1H); 3.68 (m, 1H); 2.57 (m, 1H); 2.18 (d, 1H); 1.4-1.6 (m, 7H); 0.84 (d, 3H); 0.78 (d, 3H); 0.74 (d, 3H)) was produced in quantitative yield. Next, acetophenone (0.18 mmol, 22 µl) was added to the reaction vial, and the reaction solution was stirred at room temperature for 72 h. Acetophenone was transformed to hydrosilylation product in excellent yield. Besides the desired product diphenylmenthoxy(1-phenylethoxy)silane, some siloxane redistribution products, diphenyldimenthoxysilane and diphenyldi(1-phenylethoxy)silane were also observed in GC/MS. Enantioselectivity was measured using chiral GC (γ-TA) after the product was transformed to alcohol. (R) 1-phenylethanol was produced in 40% ee.

**Table 1. Poly-NHC (2) catalyzed ketone and imine hydrosilylation with diphenylsilane.^{a}**

| Entry | Substrate | Product | Yield (%)^{b} |
|---|---|---|---|
| 1 | 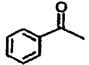 | 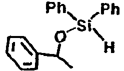 | > 95 |
| 2 | 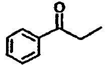 | 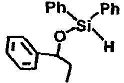 | > 95 |
| 3 | 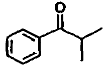 | 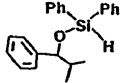 | > 95 |
| 4 | 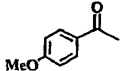 | 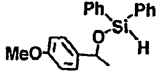 | > 95 |
| 5 | 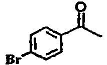 | 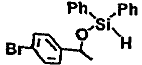 | > 95 |
| 6 | 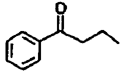 | 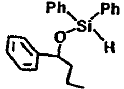 | > 95 |
| 7 | 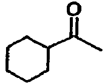 | 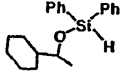 | > 95 |
| 8 | 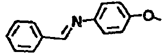 | 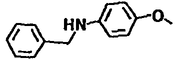 | > 95 |

| | | | |
|---|---|---|---|
| ^{a}Reaction conditions for ketone: 5% of Poly-NHC, 0.2 mmol of ketone, 0.2 mmol of diphenylsilane, 1 ml of THF, room temperature, 10-36 h. Reaction conditions for imine: 5% of Poly-NHC, 0.2 mmol of imine, 0.2 mmol of diphenylsilane, 1 ml of DMF, room temperature, 16 h. ^{b}Yield determined by GC and GC/MS. | | | |

## Claims

1. A process for converting a substrate to a product comprising exposing the substrate to a hydrosilane in the presence of a metal-free N-heterocyclic carbene catalyst, said substrate being selected from the group consisting of a carbonyl compound, an imine and an alcohol.

2. The process of claim 1 wherein the step of exposing consists of exposing the substrate to the hydrosilane in the presence of a metal-free polymeric carbene catalyst.

3. The process of claim 1 or claim 2 wherein the carbene catalyst is oligomeric or polymeric.

4. The process of any one of claims 1 to 3, said process being a process for converting the substrate to a product selected from the group consisting of a silyl ether and an amine.

5. The process of any one of claims 1 to 4, said process being a process for converting the substrate to a product having an enantiomeric excess of at least about 25%, wherein the step of exposing consists of exposing the substrate to a chiral hydrosilane in the presence of the metal-free carbene catalyst.

6. The process of any one of claims 1 to 5 wherein the step of exposing consists of exposing the substrate to the hydrosilane in the presence of a metal-free main chain polymeric carbene.

7. The process of claim 6 wherein the step of exposing consists of exposing the substrate to the hydrosilane in the presence of a metal-free polymeric main chain N-heterocyclic carbene.

8. The process of claim 7 wherein the step of exposing consists of exposing the substrate to the hydrosilane in the presence of a metal-free polymeric carbene catalyst of structure I 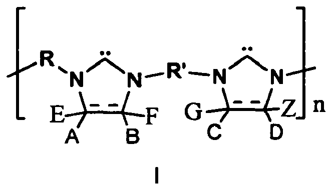 wherein:
- - represents either a single or a double bond, wherein, if -- represents a double bond, substituents E, F, G and Z are not present;
A, B, C and D, and, if present, E, F, G and Z are each, independently, hydrogen or optionally substituted alkyl, aryl, halide, heteroaryl, alkenyl or alkynyl;
R and R' are linker groups; and
n is between 5 and 1000.

9. The process of any one of claims 1 to 8 additionally comprising reusing the metal-free carbene catalyst in a subsequent reaction.

10. The process of any one of claims 1 to 9, said process being a process for hydrosilylating a carbonyl compound and the step of exposing consists of exposing said carbonyl compound to the hydrosilane in the presence of a metal-free polymeric carbene catalyst.

11. The process of claim 10 wherein the step of exposing consists of exposing said carbonyl compound to a chiral alkoxyhydrosilane in the presence of the metal-free polymeric carbene catalyst.

12. The process of claim 11 comprising the step of reacting a chiral alcohol with a dihydrosilane in the presence of the metal-free polymeric carbene catalyst to form the chiral alkoxyhydrosilane.

13. The process of claim 12 wherein the step of exposing is conducted without separation of the chiral alkoxyhydrosilane.

14. The process of any one of claims 1 to 9, said process being a process for hydrosilylating an alcohol and wherein the step of exposing consists of exposing said alcohol to the hydrosilane in the presence of a metal-free polymeric carbene catalyst.

15. The process of any one of claims 1 to 9, said process being a process for reducing an imine and wherein the step of exposing consists of exposing said imine to the hydrosilane in the presence of a metal-free polymeric carbene catalyst.

## Patentansprüche

1. Verfahren zur Umwandlung eines Substrates in ein Produkt, wobei das Substrat in Gegenwart eines metallfreien N-heterozyklischen Carben-Katalysators einem Hydrosilan ausgesetzt wird, wobei das Substrat aus der folgenden Gruppe ausgewählt ist: eine Carbonylverbindung, ein Imin und ein Alkohol.

2. Verfahren nach Anspruch 1, wobei der Schritt des Aussetzens darin besteht, dass das Substrat dem Hydrosilan in Gegenwart eines metallfreien polymeren Carben-Katalysators ausgesetzt wird.

3. Verfahren nach Anspruch 1 oder 2, wobei der Carben-Katalysator oligomer oder polymer ist.

4. Verfahren nach einem der Ansprüche 1 bis 3, wobei das Verfahren ein Verfahren zum Umwandeln des Substrates in ein Produkt ist, welches aus der folgenden Gruppe ausgewählt ist: ein Silylether und ein Amin.

5. Verfahren nach einem der Ansprüche 1 bis 4, wobei das Verfahren ein Verfahren zum Umwandeln des Substrates in ein Produkt ist, welches einen Enantiomerenüberschuss von wenigstens 25 % aufweist, wobei der Schritt des Aussetzens darin besteht, dass das Substrat einem chiralen Hydrosilan in Gegenwart des metallfreien Carben-Katalysators ausgesetzt wird.

6. Verfahren nach einem der Ansprüche 1 bis 5, wobei der Schritt des Aussetzens darin besteht, dass das Substrat dem Hydrosilan in Gegenwart eines metallfreien polymeren Hauptketten-Carbens ausgesetzt wird.

7. Verfahren nach Anspruch 6, wobei der Schritt des Aussetzens darin besteht, dass das Substrat dem Hydrosilan in Gegenwart eines metallfreien polymeren N-heterozyklischen Hauptketten-Carbens ausgesetzt wird.

8. Verfahren nach Anspruch 7, wobei der Schritt des Aussetzens darin besteht, dass das Substrat dem Hydrosilan in Gegenwart eines metallfreien polymeren Carben-Katalysators mit der Struktur I 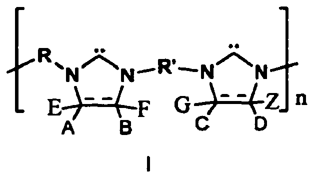 ausgesetzt wird, wobei
- - - entweder eine Einfachbindung oder eine Doppelbindung darstellt, wobei in dem Fall, dass -- eine Doppelbindung darstellt, die Substituenten E, F, G und Z nicht vorhanden sind;
- A, B, C und D und, sofern vorhanden, E, F, G, und Z jeweils unabhängig Wasserstoff oder wahlweise substituiertes Alkyl, Aryl, Halid, Heteroaryl, Alkenyl oder Alkynyl sind;
- R und R' Linkergruppen sind; und
- n zwischen 5 und 1000 beträgt.

9. Verfahren nach einem der Ansprüche 1 bis 8, in welchem außerdem in einer nachfolgenden Reaktion der metallfreie Carben-Katalysator wiederverwendet wird.

10. Verfahren nach einem der Ansprüche 1 bis 9, wobei das Verfahren ein Verfahren zum Hydrosilylieren einer Carbonylverbindung ist und der Schritt des Aussetzens darin besteht, dass die Carbonylverbindung dem Hydrosilan in Gegenwart eines metallfreien polymeren Carben-Katalysators ausgesetzt wird.

11. Verfahren nach Anspruch 10, wobei der Schritt des Aussetzens darin besteht, dass die Carbonylverbindung einem chiralen Alkoxy-Hydrosilan in Gegenwart des metallfreien polymeren Carbenkatalysators ausgesetzt wird.

12. Verfahren nach Anspruch 11, mit einem Schritt, in welchem ein chiraler Alkohol mit einem Dihydrosilan in Gegenwart des metallfreien polymeren Carben-Katalysators reagiert wird, um das chirale Alkoxy-Hydrosilan zu bilden.

13. Verfahren nach Anspruch 12, wobei der Schritt des Aussetzens ohne Abscheidung des chiralen Alkoxy-Hydrosilans durchgeführt wird.

14. Verfahren nach einem der Ansprüche 1 bis 9, wobei das Verfahren ein Verfahren zum Hydrosilylieren eines Alkohols ist und wobei der Schritt des Aussetzens darin besteht, dass der Alkohol dem Hydrosilan in Gegenwart eines metallfreien polymeren Carben-Katalysators ausgesetzt wird.

15. Verfahren nach einem der Ansprüche 1 bis 9, wobei das Verfahren ein Verfahren zum Reduzieren eines Imins ist und wobei der Schritt des Aussetzens darin besteht, dass das Imin dem Hydrosilan in Gegenwart eines metallfreien polymeren Carben-Katalysators ausgesetzt wird.

## Revendications

1. Procédé pour convertir un substrat en un produit, dans lequel le substrat est exposé à un hydrosilane en présence d'un catalyseur de carbène N-hétérocyclique sans métal, le substrat étant choisi dans le groupe suivant: un composé carbonylé, une imine et un alcool.

2. Procédé selon la revendication 1, dans lequel l'étape d'exposition consiste en ce que le substrat est exposé à l'hydrosilane en présence d'un catalyseur de carbène polymère sans métal.

3. Procédé selon la revendication 1 ou 2, dans lequel le catalyseur de carbène est oligomère ou polymère.

4. Procédé selon l'une quelconque des revendications 1 à 3, le procédé étant un procédé pour convertir le substrat en un produit choisi dans le groupe suivant: un éther de silyle et une amine.

5. Procédé selon l'une quelconque des revendications 1 à 4, le procédé étant un procédé pour convertir le substrat en un produit ayant un excès énantiomérique d'au moins environ 25 %, dans lequel l'étape d'exposition consiste en ce que le substrat est exposé à un hydrosilane chiral en présence du catalyseur de carbène sans métal.

6. Procédé selon l'une quelconque des revendications 1 à 5, dans lequel l'étape d'exposition consiste en ce que le substrat est exposé à l'hydrosilane en présence d'un carbène polymère de chaine principale sans métal.

7. Procédé selon la revendication 6, dans lequel l'étape d'exposition consiste en ce que le substrat est exposé à l'hydrosilane en présence d'un carbène de chaine principale N-hétérocyclique polymère sans métal.

8. Procédé selon la revendication 7, dans lequel l'étape d'exposition consiste en ce que le substrat est exposé à l'hydrosilane en présence d'un catalyseur de carbène polymère sans métal de structure I 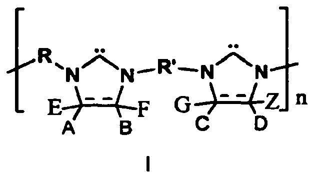 où:
- -- représente soit une liaison simple, soit une liaison double, les substituants E, F, G et Z n'étant pas présents dans le cas où -- représente une liaison double;
- A, B, C et D et, si présents, E, F, G, et Z sont chacun l'hydrogène ou, de manière optionnelle, un alkyle, un aryle, un halide, un hétéroaryle, un alkenyle ou un alkynyle substitué;
- R et R' sont des groupes de liaison; et
- n vaut entre 5 et 1000.

9. Procédé selon l'une quelconque des revendications 1 à 8, comportant en plus une réutilisation du catalyseur de carbène sans métal dans une réaction subséquente.

10. Procédé selon l'une quelconque des revendications 1 à 9, le procédé étant un procédé pour hydrosilyler un composé carbonylé et l'étape d'exposition consistant en ce que le composé carbonylé est exposé à l'hydrosilane en présence d'un catalyseur de carbène polymère sans métal.

11. Procédé selon la revendication 10, dans lequel l'étape d'exposition consiste en ce que le composé carbonylé est exposé à un alkoxy-hydrosilane chiral en présence du catalyseur de carbène polymère sans métal.

12. Procédé selon la revendication 11, comportant l'étape de faire réagir un alcool chiral avec un dihydrosilane en présence du catalyseur de carbène polymère sans métal pour former l'alkoxy-hydrosilane chiral.

13. Procédé selon la revendication 12, dans lequel l'étape d'exposition est conduite sans séparation de l'alkoxy-hydrosilane chiral.

14. Procédé selon l'une quelconque des revendications 1 à 9, le procédé étant un procédé pour hydrosilyler un alcool et dans lequel l'étape d'exposition consiste en ce que l'alcool est exposé à l'hydrosilane en présence d'un catalyseur de carbène polymère sans métal.

15. Procédé selon l'une quelconque des revendications 1 à 9, le procédé étant un procédé pour réduire une imine et dans lequel l'étape d'exposition consiste en ce que l'imine est exposée à l'hydrosilane en présence d'un catalyseur de carbène polymère sans métal.
